# FASCICULE DE BREVET EUROPEEN

(11) **EP 0 665 479 B1**
(45) Date de publication et mention de la délivrance du brevet: **02.08.2000**
(21) Numéro de dépôt: 95410005.3
(22) Date de dépôt: 26.01.1995
(51) Int. Cl.: G05B 9/03

(54) **Interrupteur composite de sécurité**
Zusammengesetzter Sicherheitsschalter
Composite safety switch

(30) Priorité: 31.01.1994 FR 9401305
(43) Date de publication de la demande: 02.08.1995
(73) Titulaire: SEXTANT AVIONIQUE S.A., 92366 Meudon la Forêt Cédex (FR)
(72) Inventeur: Bedouet, Bernard, F-26500 Bourg-Les-Valence (FR); Taurand, Christophe, F-26000 Valence (FR)
(74) Mandataire: de Beaumont, Michel

(56) Documents cités:
- EP-A- 0 192 027
- EP-A- 0 221 775
- EP-A- 0 223 461
- DE-A- 3 732 079
- US-A- 4 980 573

## Description

La présente invention concerne un interrupteur de sécurité, c'est-à-dire un interrupteur destiné à assurer la commutation la plus fiable possible d'une charge dans un environnement où, pour des raisons de sécurité, il est extrêmement important que cette charge soit alimentée ou non lorsque l'on agit sur l'interrupteur.

Un exemple d'un tel environnement est un aéronef, où il est primordial que des éléments soient actionnés dès que le pilote ou un ordinateur agit sur des interrupteurs correspondants. La défaillance d'un interrupteur, par exemple une absence de commutation lorsqu'il est actionné, ou bien une commutation intempestive, peut entraîner des conséquences graves.

Un objet de la présente invention est de prévoir un interrupteur de sécurité particulièrement fiable et nécessitant un faible entretien.

Cet objet est atteint grâce à un interrupteur composite formé d'une association en parallèle ou en série d'au moins deux interrupteurs simples. Chaque interrupteur simple est muni d'un élément de mesure du courant dans l'interrupteur simple dans le cas d'une association en parallèle, d'un élément de mesure de la tension aux bornes de l'interrupteur simple dans le cas d'une association en série, et d'un circuit de contrôle recevant les informations fournies par les éléments de mesure ainsi qu'un signal de commande de l'interrupteur simple, et fournissant un signal de panne actif si la tension mesurée est élevée ou le courant mesuré faible alors que l'interrupteur simple est commandé pour être fermé, ou bien si le courant mesuré est élevé ou la tension mesurée faible alors que l'interrupteur simple est commandé pour être ouvert.

Selon un mode de réalisation de la présente invention, des interrupteurs simples disposés en série sont munis chacun d'une résistance connectée en parallèle de valeur élevée.

Selon un mode de réalisation de la présente invention, le signal de panne est actif seulement si la tension mesurée est élevée alors que l'interrupteur simple est commandé pour être fermé ou bien si le courant mesuré est élevé alors que l'interrupteur simple est commandé pour être ouvert.

La présente invention prévoit également un procédé de test d'un interrupteur composite du type susmentionné, comprenant les étapes de commuter des interrupteurs simples de l'interrupteur composite sans que l'état de conduction de l'interrupteur composite soit modifié, et de relever les signaux de panne des circuits de contrôle.

Ces objets, caractéristiques et avantages ainsi que d'autres de la présente invention seront exposés en détail dans la description suivante de modes de réalisation particuliers faite à titre non-limitatif à l'aide des figures jointes parmi lesquelles :
les figures 1A à 1D représentent différents types d'interrupteurs composites assurant une grande fiabilité par redondance ;
la figure 2A représente un mode de réalisation d'interrupteur simple faisant partie d'un interrupteur composite selon l'invention ;
les figures 2B et 2C sont destinées à illustrer la détection d'un interrupteur défaillant d'un interrupteur composite selon l'invention ;
les figures 3A à 3D représentent des tableaux qui récapitulent les états des interrupteurs composites des figures 1A à 1D en fonction des états de chacun de leurs interrupteurs simples ;
les figures 4A à 4D représentent des diagrammes de transition correspondant aux interrupteurs composites des figures 1A à 1D ; et
la figure 5 représente un tableau contenant des exemples de cycle de test non perturbateur des interrupteurs composites des figures 1A à 1D.

La présente invention est basée sur la redondance d'interrupteurs pour assurer qu'un interrupteur composite, constitué de ces interrupteurs redondants, assure de manière particulièrement fiable sa fonction.

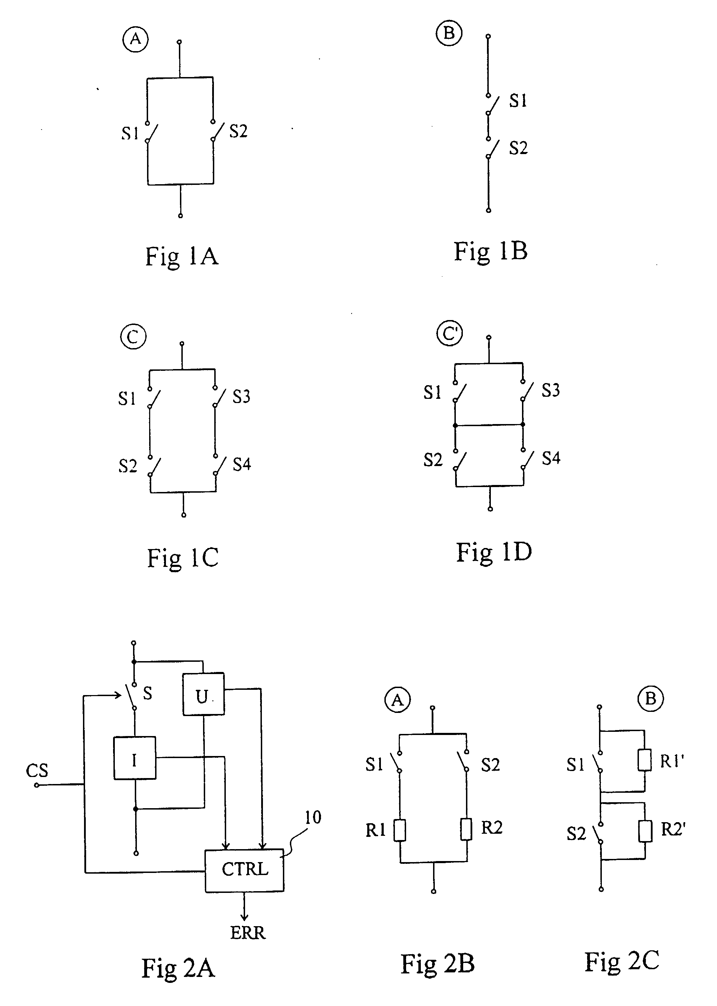

La figure 1A représente un type A d'interrupteur composite destiné à assurer une grande fiabilité à la fermeture. Un tel interrupteur convient pour commander une charge qu'il est important d'alimenter et que l'on peut se permettre de laisser alimentée en cas de panne de l'interrupteur composite.

Cet interrupteur composite A comprend deux interrupteurs simples S1 et S2 connectés en parallèle. Initialement, les interrupteurs S1 et S2 sont ouverts. Lorsque l'on veut alimenter la charge, l'un des interrupteurs, par exemple S1, est fermé. Si l'interrupteur S1, défaillant, ne peut plus se fermer, on alimente la charge en fermant l'interrupteur S2. Il est également envisageable de fermer les deux interrupteurs S1 et S2 au moment d'alimenter la charge. Dans ce cas, si l'un des interrupteurs ne parvient pas à se fermer, l'autre interrupteur assure quand même la fermeture.

Par contre, si l'un des interrupteurs S1 et S2, défaillant, reste fermé, la charge est en permanence alimentée. Pour cette raison, il est important avec ce type d'interrupteur composite qu'il ne soit pas gênant que la charge soit intempestivement alimentée. On dira que ce type d'interrupteur composite est un interrupteur à exigence à la fermeture.

La figure 1B représente un type B d'interrupteur composite à exigence à l'ouverture. Ce type d'interrupteur est utilisé lorsqu'il est important que la charge soit mise hors tension quand on agit sur l'interrupteur, mais que l'on tolère une extinction intempestive de celle-ci. Cet interrupteur composite comprend deux interrupteurs simples S1 et S2 connectés en série.

Initialement, les deux interrupteurs S1 et S2 sont fermés, et la charge est alimentée. Pour mettre la charge hors tension, l'un des interrupteurs, par exemple S1 est ouvert. Si l'interrupteur S1, défaillant, reste fermé, on ouvre l'interrupteur S2. Pour mettre la charge hors tension, on pourrait également ouvrir les deux interrupteurs S1 et S2. Alors, si l'un des interrupteurs reste fermé en cas de panne, la charge est quand même mise hors tension par l'autre interrupteur.

La figure 1C représente un type C d'interrupteur composite à exigence à la fermeture et à l'ouverture, la priorité à l'ouverture étant supérieure à la priorité à la fermeture. Ce type d'interrupteur est utilisé lorsqu'il est primordial que la charge soit alimentée ou mise hors tension lorsque l'on agit sur l'interrupteur.

Cet interrupteur composite C comprend deux interrupteurs composites du type B, S1/S2 et S3/S4, connectés en parallèle. Pour que cet interrupteur composite n'assure plus sa fonction il faut qu'au moins deux de ses interrupteurs simples tombent en panne d'une manière prédéterminée. Les possibilités de panne sont les suivantes :
l'interrupteur composite reste fermé si les interrupteurs S1 et S2 sont fermés ou si les interrupteurs S3 et S4 sont fermés ; et
l'interrupteur composite reste ouvert pour l'un des couples d'interrupteurs ouverts S1/S3, S2/S4, S2/S3, et S1/S4.

Les couples défectueux restants possibles n'entraînent pas un mauvais fonctionnement de l'interrupteur composite. On constate qu'une ouverture intempestive de l'interrupteur composite est plus probable qu'une fermeture intempestive, puisque le nombre de couples défectueux entraînant cette panne est plus important que le nombre de couples défectueux entraînant la panne inverse. Pour cette raison on dit que cet interrupteur composite a une priorité à l'ouverture supérieure à la priorité à la fermeture.

La figure 1D représente un type C' d'interrupteur composite à exigence à l'ouverture et à la fermeture, la priorité à la fermeture étant supérieure à celle à l'ouverture. Cet interrupteur comprend deux interrupteurs composites de type A, S1/S3 et S2/S4, connectés en série. Les cas de panne de cet interrupteur composite sont les suivants :
l'interrupteur composite reste fermé si les couples d'interrupteurs S1/S2, S1/S4, S3/S2 et S3/S4 sont fermés ; et
l'interrupteur composite reste ouvert si les interrupteurs S1 et S3 sont ouverts ou si les interrupteurs S2 et S4 sont ouverts.

On constate qu'il y a une probabilité plus importante pour que l'interrupteur composite C' reste fermé en cas de panne, puisque le nombre de couples défectueux entraînant cette panne est plus important que le nombre de couples défectueux entraînant la panne inverse.

Les interrupteurs simples S de l'un quelconque des interrupteurs composites susmentionnés peuvent être tous ouverts ou fermés pour ouvrir ou fermer l'interrupteur composite, ce qui entraîne une occultation automatique des défauts des interrupteurs simples, c'est-à-dire que l'interrupteur composite continue à assurer sa fonction même si un de ses interrupteurs simples, ou même davantage pour les types C et C', est défaillant. Du fait qu'il faut que deux interrupteurs simples tombent en panne pour que l'interrupteur composite tombe en panne, la probabilité de panne de l'interrupteur composite est égale au produit des probabilités de panne des deux interrupteurs simples.

Si un des interrupteurs simples est défaillant, il convient de le détecter, même si son défaut est occulté, afin de le remplacer pour que l'interrupteur composite continue à assurer sa fiabilité totale.

La figure 2A représente un mode de réalisation d'interrupteur simple selon l'invention, à intégrer dans un interrupteur composite, permettant une détection de panne et de signaler cette panne afin qu'un observateur puisse remplacer cet interrupteur simple.

Chaque interrupteur simple S d'un interrupteur composite selon l'invention comprend un élément de mesure I du courant traversant l'interrupteur S et un élément U de mesure de la tension aux bornes de l'ensemble de l'interrupteur S et de l'élément I. La mesure de tension pourrait également se faire directement aux bornes de l'interrupteur S. Toutefois, la configuration représentée permet, pour une mesure de tension, de vérifier en même temps l'interrupteur S et l'élément de mesure de courant I. Les tension et courant mesurés sont fournis à un circuit de contrôle 10 qui fournit un signal d'erreur ERR lorsqu'une panne de l'interrupteur S est détectée. Ce signal ERR est, par exemple, exploité par un ordinateur qui commande les interrupteurs, pour rassembler toutes les informations de panne des interrupteurs et les signaler à l'observateur. Le circuit de contrôle 10 prend également en compte un signal CS de commande de l'interrupteur S, qui est par exemple un signal fourni par un ordinateur.

Lorsque l'interrupteur S est fermé, la tension mesurée par l'élément U est pratiquement nulle et le courant mesuré par l'élément I est non nul si une charge est connectée à l'interrupteur. Si l'interrupteur S est ouvert, la tension mesurée par l'élément U est élevée, c'est-à-dire proche de la tension d'alimentation de la charge, et le courant mesuré par l'élément I est nul.

Ainsi, le circuit de contrôle 10 signale une panne de fermeture de l'interrupteur S si le courant mesuré est non nul, alors que le signal CS est à un état sélectionnant l'ouverture de l'interrupteur S. Une panne de fermeture pourrait également être signalée si la tension mesurée était nulle, mais cette mesure déclencherait une signalisation de panne intempestive si une charge n'était pas branchée, ou disposée en parallèle avec un autre interrupteur fermé.

Le circuit de contrôle 10 signale une panne d'ouverture de l'interrupteur S si la tension mesurée est élevée alors que le signal CS est à un état sélectionnant la fermeture de l'interrupteur S. Une panne d'ouverture pourrait également être signalée si le courant mesuré était nul, mais cette mesure déclencherait une signalisation de panne intempestive si une charge n'était pas branchée, ou disposée en série avec un autre interrupteur ouvert.

La double mesure, de courant et de tension, permet en outre de vérifier l'évolution de la résistance à l'état fermé de l'interrupteur et de signaler un vieillissement, avant qu'une panne franche se produise, si cette résistance devient anormalement élevée.

La double mesure est en tout cas nécessaire dès que l'on combine au moins deux interrupteurs S dans l'un des types composites A, B, C ou C', comme on l'expose ci-après.

La figure 2B représente deux interrupteurs S1 et S2 selon l'invention combinés dans un interrupteur composite de type A. Les mesures de courant dans les interrupteurs S1 et S2 se font par exemple en mesurant les tensions aux bornes de résistances shunt respectives R1 et R2 disposées en série avec les interrupteurs S1 et S2.

Avec ce type d'interrupteur composite, le circuit de contrôle 10 utilise essentiellement les mesures de courant pour détecter une panne franche. Si les deux interrupteurs S1 et S2 sont fermés, un courant sensiblement égal circule dans les résistances R1 et R2, supposées de même valeur. Si l'un des interrupteurs S1 et S2 est fermé, il est inutile, sauf pour vérifier l'évolution de la résistance de l'interrupteur fermé, de mesurer la tension aux bornes de l'autre interrupteur, puisque celle-ci est pratiquement la même que cet interrupteur soit ouvert ou fermé. Si l'un des interrupteurs est fermé normalement et que l'autre est fermé intempestivement, on mesure un courant non nul dans ce dernier, ce qui déclenche la détection de sa panne par le circuit de contrôle 10. De même, dans le cas où on est sûr qu'une charge est branchée, si l'un des interrupteurs est intempestivement ouvert, le courant mesuré devient nul, ce qui déclenche également une détection de panne.

La figure 2C représente un interrupteur composite de type B dans lequel on exploite plutôt les mesures de tension aux bornes des interrupteurs pour détecter une panne franche. Chacun des interrupteurs S1 et S2 comprend, outre l'élément U de mesure de tension correspondant, une résistance respective R1' et R2' connectée à ses bornes. Les valeurs des résistances R1' et R2' sont suffisamment élevées pour que la charge que commande l'interrupteur composite ne soit pas perturbée lorsque l'un des interrupteurs S1 et S2 est ouvert.

Si les interrupteurs S1 et S2 sont ouverts, la tension aux bornes de chacune des résistances R1' et R2' est égale à la moitié de la tension d'alimentation, en supposant que les résistances R1' et R2' sont de même valeur. Ainsi, si l'un des interrupteurs est intempestivement fermé, la tension à ses bornes s'annule et sa panne est détectée. De même, dans le cas où on est sûr qu'une charge est branchée, si l'un des interrupteurs est intempestivement ouvert, la tension à ses bornes devient élevée, ce qui déclenche également la détection de sa panne.

Dans chacun des interrupteurs composites de type C et C', on utilise la mesure de tension ou la mesure de courant selon les états des interrupteurs simples S.

Dans toutes les configurations où l'interrupteur composite C est ouvert, tous ses interrupteurs S peuvent être vérifiés individuellement de manière statique par la mesure de tension.

Si l'interrupteur composite C est fermé par une seule de ses branches S1/S2 et S3/S4, les interrupteurs de la branche fermée peuvent être vérifiés individuellement de manière statique par la mesure de tension. Pour garantir la justesse de cette vérification, la branche supposée ouverte est préalablement vérifiée par la mesure de courant. On ne peut pas vérifier individuellement de manière statique les interrupteurs de la branche ouverte.

Dans toutes les configurations où l'interrupteur composite C' est fermé, tous les interrupteurs S peuvent être vérifiés individuellement de manière statique par la mesure de courant.

Si au moins un interrupteur S est fermé dans un premier des couples S1/S3 et S2/S4, les interrupteurs S du deuxième couple peuvent être vérifiés individuellement de manière statique par la mesure de courant. Pour garantir la justesse de cette vérification, le premier couple est préalablement vérifié par la mesure de tension de l'un des interrupteurs S de ce couple. On ne peut pas vérifier individuellement de manière statique les interrupteurs du premier couple.

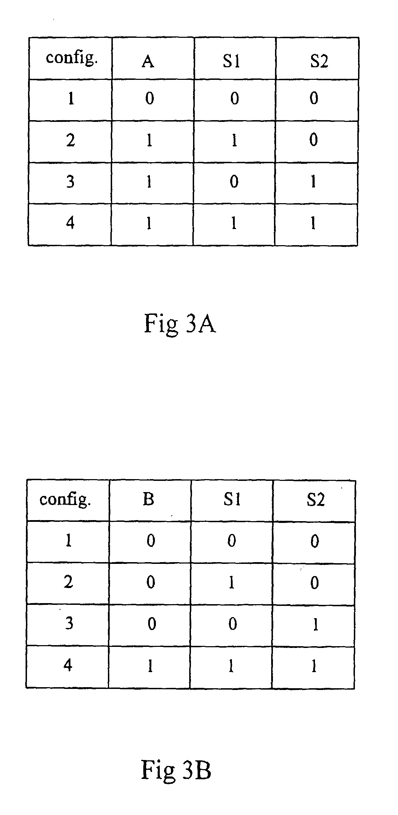

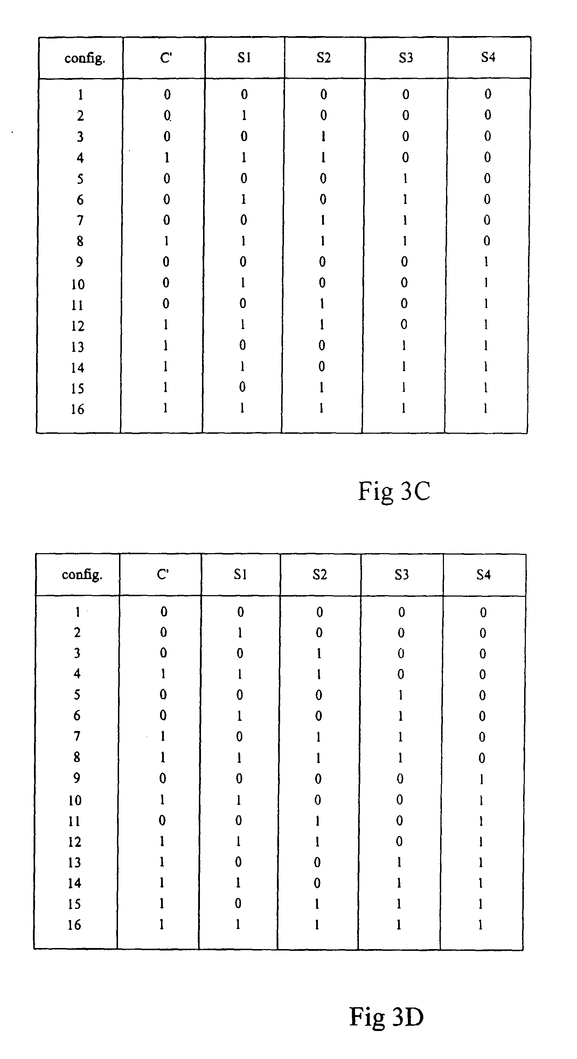

Les figures 3A à 3D sont considérées comme faisant partie intégrante de la présente description. Elles représentent des tableaux illustrant respectivement les différents états des interrupteurs composites A à C' en fonction de toutes les combinaisons d'états des interrupteurs simples S formant les interrupteurs composites.

Dans les premières colonnes des tableaux, on affecte un numéro à chaque configuration possible de l'interrupteur composite, c'est-à-dire à chaque combinaison possible d'états des interrupteurs S. La deuxième colonne indique les états de l'interrupteur composite, et les autres colonnes indiquent les états des interrupteurs simples S. Un état fermé est représenté par un 1 et un état ouvert par un 0.

On remarque pour les interrupteurs composites A et C' qu'il y a un plus grand nombre de configurations où ces interrupteurs composites sont fermés que de configurations où ils sont ouverts. Ceci montre la priorité à la fermeture de ces interrupteurs composites. De même, on remarque pour les interrupteurs composites D et C, qu'il y a un plus grand nombre de configurations où ces interrupteurs sont ouverts que de configurations où ils sont fermés. Ceci montre la priorité à l'ouverture de ces interrupteurs composites.

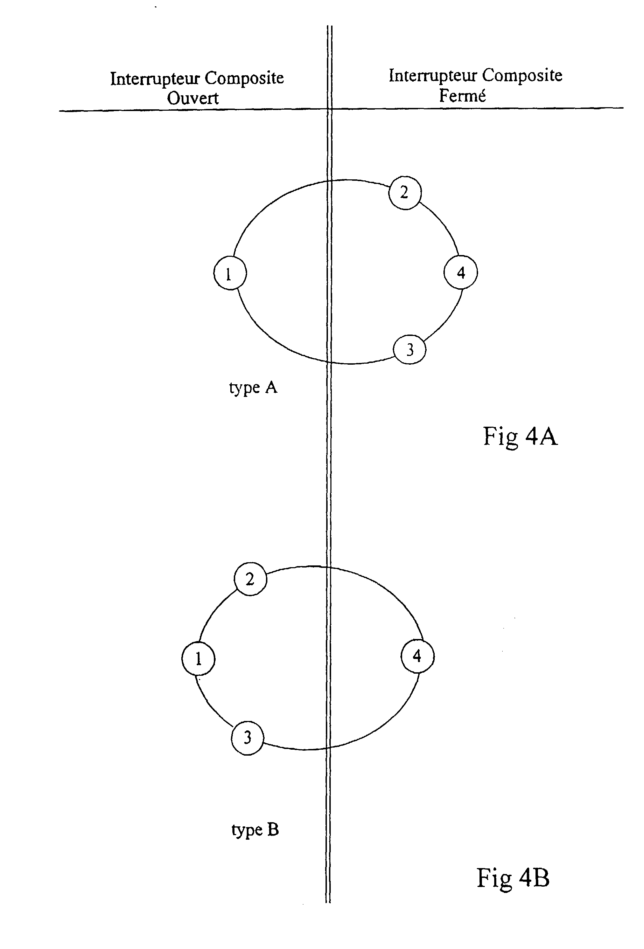

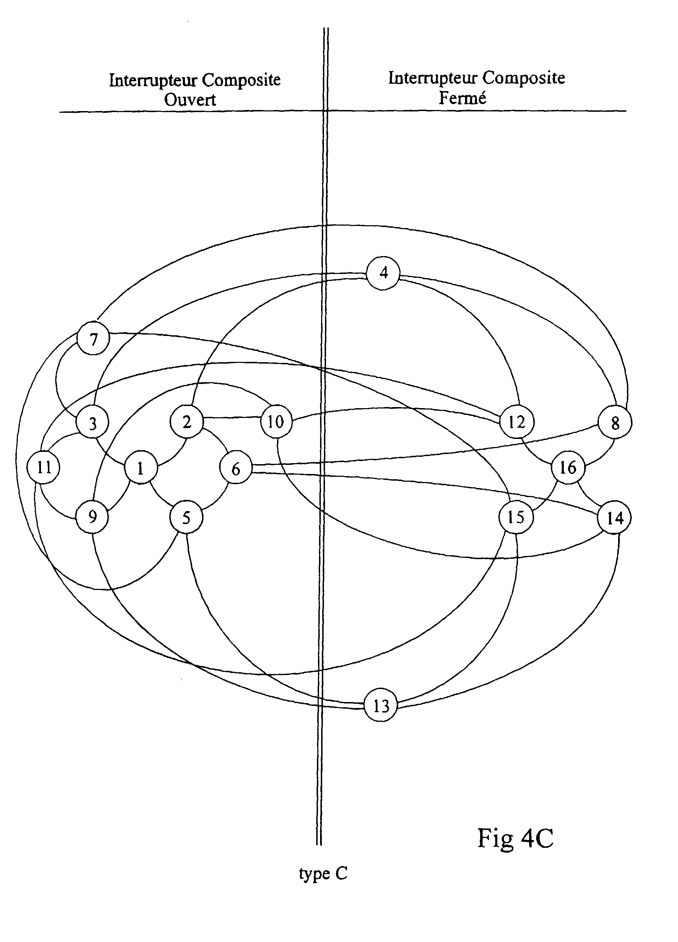

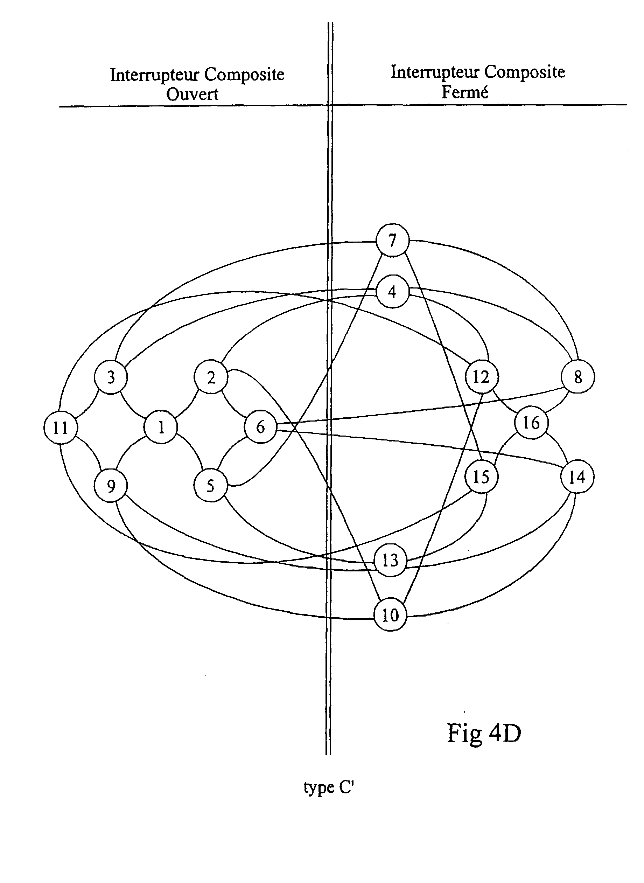

Les figures 4A à 4D, également considérées comme faisant partie intégrante de la présente description, représentent des diagrammes de transition des interrupteurs composites A à C'. Dans la colonne de gauche, on représente les configurations où les interrupteurs composites sont ouverts et dans la colonne de droite les configurations où ils sont fermés. Ces configurations sont représentées par leurs numéros des premières colonnes des tableaux des figures 3A à 3D. Une configuration est reliée à une autre par une ligne lorsqu'il suffit de commuter un seul interrupteur simple pour passer de l'une à l'autre de ces configurations reliées.

Ce genre de représentation est utile pour réaliser la commande d'un interrupteur composite de manière à pouvoir tester ses interrupteurs simples de manière individuelle à l'ouverture et à la fermeture, comme cela est décrit ci-après.

La présente invention permet d'effectuer des cycles de test complet sans perturber la charge commandée, c'est-à-dire que l'on peut vérifier certains des interrupteurs simples S (ou tous) à l'ouverture et à la fermeture sans entraîner pour autant une alimentation d'une charge hors tension ou une extinction d'une charge alimentée.

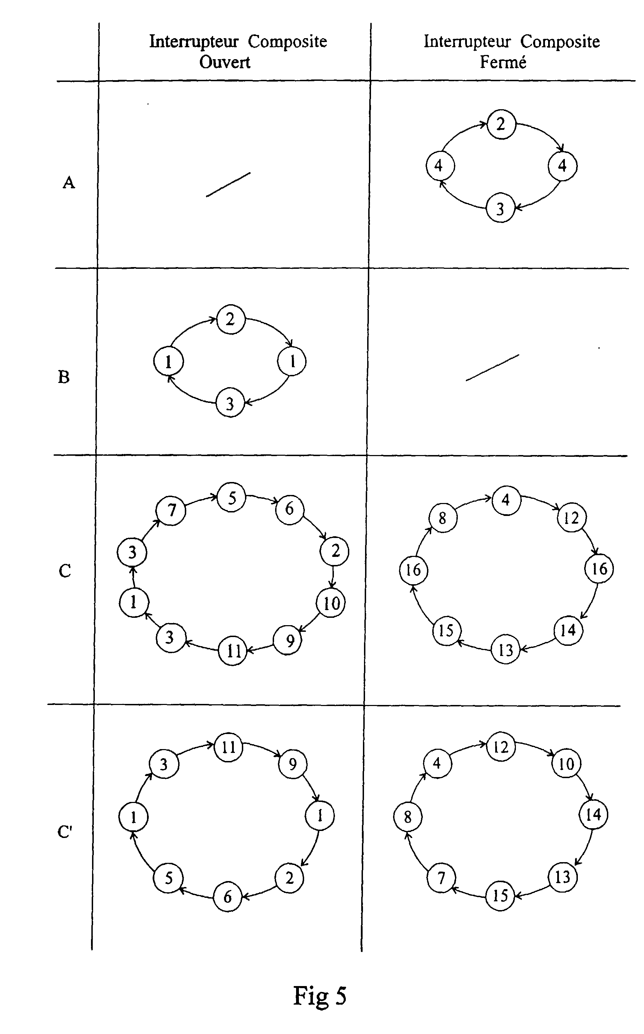

La figure 5 représente sous forme de tableau des exemples de cycles de test complet que l'on peut effectuer dans chacun des interrupteurs composites A à C'. Dans la colonne de gauche, on représente des exemples de cycles de test effectués tandis que l'interrupteur composite reste ouvert, et dans la colonne de droite, on représente des exemples de cycles de test effectués tandis que l'interrupteur composite reste fermé. Différentes configurations représentées par les numéros des tableaux correspondants, sont reliées par des flèches indiquant le sens de commutation d'une configuration à l'autre.

Ces cycles de test non perturbants sont, par exemple, effectués périodiquement, dès que l'état de l'interrupteur composite le permet, par un ordinateur qui commande les interrupteurs S et qui relève et analyse les signaux ERR fournis par les circuits de contrôle 10 correspondants.

Dans l'interrupteur composite A, on ne peut pas tester de façon complète tous les interrupteurs S sans alimenter la charge. Par contre, on peut les tester complètement tandis que la charge est en permanence alimentée. Dans ce cas, l'interrupteur composite est testé en effectuant le cycle 2, 4, 3, 4 (ces nombres correspondant aux configurations du tableau de la figure 3A).

De même, l'interrupteur composite B ne peut pas subir un test complet lorsqu'il est en permanence fermé, mais il peut subir ce test lorsqu'il est en permanence ouvert. On effectue dans ce cas le cycle 1, 2, 1, 3 (ces nombres correspondant aux configurations du tableau de la figure 3B).

Les interrupteurs composites C et C' peuvent chacun subir un test complet, qu'ils soient en permanence ouverts ou en permanence fermés. Les cycles représentés à la figure 5, considérés comme formant partie intégrante de la présente description, ne sont que des exemples parmi de nombreuses autres possibilités.

En associant plusieurs interrupteurs du type de la figure 2A, on crée également une redondance des éléments de mesure U et I, ce qui permet de compenser également des défaillances de ces éléments de mesure. Par exemple, dans un interrupteur composite A, la mesure de tension aux bornes des interrupteurs simples S est obtenue aussi bien par l'élément U de l'interrupteur S1 que par l'élément U de l'interrupteur S2. Il en va de même pour les éléments I de mesure de courant dans l'interrupteur composite B.

La présente invention a été décrite à l'aide de quatre types d'interrupteur composite. Bien entendu, la présente invention s'applique à d'autres interrupteurs composites comprenant plus de quatre interrupteurs simples.

## Revendications

1. Interrupteur composite formé d'une association en parallèle ou en série d'au moins deux interrupteurs simples (S1, S2), caractérisé en ce que chaque interrupteur simple (S) est muni d'un élément (I) de mesure du courant dans l'interrupteur simple dans le cas d'une association en parallèle, d'un élément (U) de mesure de la tension aux bornes de l'interrupteur simple dans le cas d'une association en série, d'un circuit de contrôle (10) recevant les informations fournies par les éléments de mesure ainsi qu'un signal de commande (CS) de l'interrupteur simple, et fournissant un signal de panne actif (ERR) si la tension mesurée est élevée ou le courant mesuré faible alors que l'interrupteur simple est commandé pour être fermé, ou bien si le courant mesuré est élevé ou la tension mesurée faible alors que l'interrupteur simple est commandé pour être ouvert.

2. Interrupteur composite selon la revendication 1, caractérisé en ce que des interrupteurs simples disposés en série sont munis chacun d'une résistance (R1', R2') connectée en parallèle de valeur élevée.

3. Interrupteur composite selon la revendication 1, caractérisé en ce que le signal de panne (ERR) est actif seulement si la tension mesurée est élevée alors que l'interrupteur simple est commandé pour être fermé ou bien si le courant mesuré est élevé alors que l'interrupteur simple est commandé pour être ouvert.

4. Procédé de test d'un interrupteur composite selon la revendication 1, caractérisé en ce qu'il comprend les étapes de commuter des interrupteurs simples (S) de l'interrupteur composite sans que l'état de conduction de l'interrupteur composite soit modifié, et de relever les signaux de panne (ERR) des circuits de contrôle (10).

## Patentansprüche

1. Aus einer Kombination von wenigstens zwei einfachen Schaltern (S1, S2) in Parallel- oder in Reihenschaltung gebildeter zusammengesetzter Schalter,
dadurch gekennzeichnet, daß
jeweils jeder einfache Schalter (S) mit einem Element (I) zur Strommessung in dem einfachen Schalter im Fall einer Parallelkombination, mit einem Element (U) zur Messung der Spannung an den Anschlüssen des einfachen Schalters im Fall einer Reihenschaltungskombination sowie mit einer Steuerschaltung (10) versehen ist, welcher die von den Meßelementen gelieferten Informationen sowie ein Steuersignal (CS) des einfachen Schalters zugeführt werden und die ein aktives Stör- bzw. Ausfallsignal (ERR) erzeugt, falls die gemessene Spannung hoch oder der gemessene Strom niedrig ist, während der einfache Schalter Steuerbefehl zur Schließung erhalten hat, oder wenn der gemessene Strom hoch und die gemessene Spannung niedrig ist, während der einfache Schalter Steuerbefehl zur Öffnung erhalten hat.

2. Zusammengesetzter Schalter nach Anspruch 1,
dadurch gekennzeichnet, daß bei in Reihenschaltung angeordneten einfachen Schaltern jeweils jeder mit einem Widerstand (Rl', R2') hohen Betrags in Parallelschaltung versehen ist.

3. Zusammengesetzter Schalter nach Anspruch 1,
dadurch gekennzeichnet, daß das Stör- bzw. Ausfallsignal (ERR) nur dann aktiviert ist, wenn die gemessene Spannung hoch ist, während der einfache Schalter Steuerbefehl zur Schließung erhalten hat, oder wenn der gemessene Strom hoch ist, während der einfache Schalter Steuerbefehl zur Öffnung erhalten hat.

4. Verfahren zum Testen eines zusammengesetzten Schalters nach Anspruch 1,
dadurch gekennzeichnet, daß das Verfahren die Verfahrensschritte: Umschalten der einfachen Schalter (S) des zusammengesetzten Schalters ohne Änderung des Leitungszustands des zusammengesetzten Schalters, und Lesen der Stör- bzw. Ausfallsignale (ERR) der Steuerschaltungen (10) umfaßt.

## Claims

1. A composite switch constituted by a series or parallel association of at least two simple switches (S1, S2), characterized in that each simple switch (S) includes an element (I) for measuring the current in the simple switch in the case of a parallel association; an element (U) for measuring the voltage across the simple switch in the case of a series association; and a control circuit (10) receiving the information provided by the measuring elements as well as a control signal (CS) from the simple switch, and providing an active failure signal (ERR) if the measured voltage is high or the measured current is low while the simple switch is controlled to be turned on, or if the measured current is high or the measured voltage is low while the simple switch is controlled to be turned off.

2. The composite switch of claim 1, characterized in that the simple switches arranged in series have a high value resistor (R1', R2') connected in parallel.

3. The composite switch of claim 1, characterized in that the failure signal (ERR) is active only if the measured voltage is high whereas the simple switch is controlled to be switched on, or if the measured current is high whereas the simple switch is controlled to be off.

4. A method for testing a composite switch according to claim 1, characterized in that it includes the steps of switching the simple switches (S) of the composite switch without modifying the conductive state of the composite switch, and of reading the failure signals (ERR) of the control circuits (10).
